# EUROPEAN PATENT APPLICATION

(11) **EP 2 868 374 A1**
(43) Date of publication of application: **06.05.2015**
(21) Application number: 13810318.9
(22) Date of filing: 24.06.2013
(51) Int. Cl.: B01J 29/08, B01J 37/00, B01J 37/10, C10G 11/05, B01J 37/30

(54) **CATALYTIC CRACKING OF ORGANIC COMPOUNDS, USING A MODIFIED Y ZEOLITE**

(30) Priority: 29.06.2012 ES 201231021
(71) Applicant: Consejo Superior de Investigaciones Científicas (CSIC), 28006 Madrid (ES); Universitat Politècnica de València, 46022 Valencia (ES)
(72) Inventor: CORMA CANÓS, Avelino, 46022 Valencia (ES); MARTÍNEZ SÁNCHEZ, Mª Cristina, 46022 Valencia (ES)
(74) Representative: Cueto, Sénida
(86) International application number: PCT/ES2013/000152
(87) International publication number: WO 2014/001587

(57) **Abstract**

The present invention relates to a method in the absence of hydrogen for the catalytic cracking of organic compounds using a zeolitic material, modified Y zeolite. In said cracking method, the modified zeolitic material can be the sole zeolitic component or can be combined with at least one second zeolitic component. The catalytic cracking method of the invention comprises at least the following steps: a) introducing at least one first zeolitic material, modified zeolite, into a reactor; b) supplying the reactor with at least one organic compound; c) leaving the modified zeolite and the organic compound in contact with another for the time necessary for the reaction to occur.

## Description

### Tehnical field of the invention

Catalysts for catalytic cracking.

### State of the art prior to the invention

The general trend in catalytic processes, including those belonging to the field of refining is to reduce costs by increasing the activity of the catalysts employed, and especially by optimizing its selectivity *"*Marcilly, C., Journal of Catalysis 216, 47 (2003*)".* Moreover, conversion processes become more important due to the decreased consumption of heavy fuel oil. It is envisaged that the process of fluidized bed catalytic cracking (FCC) remains the main process of converting vacuum distillates, thanks to its high processing capability and flexibility, which allows to direct its production to gases (propylene and butenes) gasoline or diesel with minimum modifications of the unit or the operating conditions (A. Corma, B.W. Wojciechowski, Catal. Rev. Sci. Eng. 27 (1985) 29.

Global consumption of liquid fuels continues to rise, but demand is changing in recent years, with a clear increase in demand for diesel and decrease for gasoline. This trend is much more noticeable in the European market *"*Hydrocarbon Processing vol 82, n°9 p47 (2003*)".* The demand for light olefins for the petrochemical industry is continuously growing as well *"*Marcilly C., Studies in Surface Science and Catalysis 135, 37 (2001*);* Hydrocarbon Processing vol. 80, n°6 p 23, (2001*)*". The fluid catalytic cracking or its variant, the deep catalytic cracking (DCC), along with the steam cracking, are the units that contribute most to the production of C₃-C₅ olefins. Especially the catalytic cracking produces a big amount of propylene, one of the most demanded olefins. Moreover, FCC contributes approximately 30% of the gasoline stream in the refinery, and at the moment in which there is, especially in Europe a global excess production of gasoline, it is possible to increase the selectivity to propylene from the FCC unit at the expense of the increased conversion of gasoline fraction, thus optimizing the economic performance of the unit.

Furthermore, the diesel fraction obtained by FCC has a low cetane number, due to its high content of aromatics, especially polyaromatics. Due to the processing capacity of the FCC unit would be of great interest, especially from the economic standpoint, to improve the quality of said fraction during the process itself. There is therefore the need to develop a new generation of FCC catalyst that provides good conversion of the heavy fractions to liquid fuels with low aromatics content, and while maximizing light olefin production, especially propylene (W. Vermeiren, J.-P. Gilson, Topics in Catalysis 52 (2009) 1131-1161).

In the early 1960s, Y zeolite replaced the amorphous silica-alumina as an active component in FCC catalysts, and since then, the properties thereof have been optimized progressively increasing the activity and adjusting the selectivity, trying to adapt the production to market needs. These improvements were achieved by stabilizing and ultra-stabilizing Y zeolite by introducing rare earths (RE) and/or by means of dealumination processes through hydrothermal treatments combined with acid treatments, all of them well known procedures in the state of the art.

Moreover, it has been proposed to replace Y zeolite with new large pore zeolites such as ZSM-20, Beta, Omega, L, or mordenite (see J. Chem. Soc., Faraday Trans. 86 (1990) 1001*,* J. Catal. 165 (1997) 102*,* Stud. Surf. Sci. Catal. 46 (1989) 115, US5314612, EP489324, US474292, US4137152, EP350331, FR2661621).

In EP 1445297 the use of zeolite ITQ-21, a three-dimensional large-pore zeolite with a very open structure which is more active in the conversion of a vacuum diesel and more selective to propylene than a commercial ultra-stabilized USY zeolite, is described. In WO2008/014920 it is shown that ITQ-33 with extra-large 18MR (12.2 Å) pores and 10MR average pore interconnected channels, simultaneously produces high yields to diesel and light olefins, especially to propylene. However, the practical application of these new materials is limited due to its high manufacturing cost.

The production of propylene in the FCC can be increased by modifying the unit operating conditions, such as increasing the reactor temperature. However, this solution produces a significant increase in gases and especially in undesired dry gas. By employing novel catalyst compositions involving the use of zeolite mixtures best result are obtained. The use of ZSM-5 zeolite as an additive in FCC catalysts leads to an increase in C₃ and C₄ olefins (see for example US-3758403, US-3769202; US-3894931; US-3894933; US-3894934, US- 3926782, US-4309280, US-4309279, US-437 458 and Buchanan, JS and Adewuyi, YG, Applied Catalysis: A General, 134, 247 (1996*)*; Madon, RJ, Journal of Catalysis 129 (1), 275 (1991*)*. However, it is known that the introduction of zeolite ZSM-5 has little or no influence on the total conversion *"*Studies in Surface Science and Catalysis, vol. 76, 499 (1993*)*".

Desilication controlled in basic medium is described in the literature as an economical and effective process, which generates additional mesoporosity in microporous zeolitic structures (see Groen et al., Micro. Meso. Mater. 69 (2004) 29, Perez-Ramirez et al., Chem. Soc. Rev. 37 (2008) 2530). In WO2008/147190 the preparation of a mesoporous mordenite zeolite is described by alkaline treatment that generates mesoporosity by means of silicon extraction. Alkaline treatments can be used independently or in combination with other post-synthesis treatments. For example, performing sequentially basic and acid treatments can be effective to improve the catalytic performance of a modified zeolitic material. Basic treatment creates mesopores, whereas acid treatment dissolves the extra-framework species, rich in aluminum, and modifies the surface acidity of the sample (see, among others, Fernandez et al., Chem. Eur. J. 16 (2010) 6224, Verboekend et al., J. Phys. Chem. C 115 (2011) 14193*,* Catal. Sci. Technol. 1 (2011) 1331).

What has been observed according to the method of the present invention is that catalysts that contain modified Y zeolites with additional mesoporosity and stabilized by exchange with rare earths (RE) and/or hydrothermal treatment, are more selective to the diesel fraction and produce a more olefinic LPG gas fraction than a commercial equally active zeolite. Furthermore, the diesel fraction obtained contains less polyaromatics and these catalysts convert the heavy bottom fraction, with boiling point above 482 °C to a higher extent.

### DESCRIPTION OF THE INVENTION

The present invention describes a cracking process for organic compounds and, preferably, of hydrocarbons fractions derived from petroleum or synthetic ones, in the absence of hydrogen, using a modified zeolitic material, the structure of which is characterized by the presence of additional mesoporosity generated by a controlled basic treatment.

Furthermore, in the cracking process, the modified zeolitic material may be present as the sole zeolitic component, or in combination with at least one second zeolitic component.

The present invention relates to a catalytic cracking process of organic compounds in the absence of hydrogen comprising, at least, the following steps:
a. introducing at least a modified Y zeolite, into a reactor,
b. feeding the reactor with at least one organic compound,
c. leaving in contact the modified Y zeolite and the organic compound the time necessary for the reaction to occur.

In this process, the modified Y zeolite may have mesoporosity and is preferably prepared from at least one precursor into contact with a basic aqueous solution and at least a hydrothermal treatment. The preparation of Y zeolite may further comprise at least one ion exchange process.

Zeolites used as precursors of the modified zeolite, utilized in the process of the present invention are those having a microporous type FAU structure, according to IUPAC nomenclature. In The Atlas of Zeolite Framework Types (C. Baerlocher, WM Merier, DH Olson, Sixth revised edition ed.; Elsevier, BV: 2007) one can find all the information related to this structure.

The precursor material of the modified zeolite used in the process of the present invention can be a Y zeolite in its acid form (HY), a Y zeolite in its stabilized form, in which the stabilization was carried out by ion exchange with multivalent cations such as, for example, rare earths (REY), or ultra-stabilized (USY), in which the ultra-stabilization was carried out by partial dealumination by means of thermal treatments at temperatures above 500 °C, hydrothermal treatments combined with acid treatments, or a combination of the preceding methods. All these modification procedures are known and well described in the state of the art (see for instance Introduction to Zeolite Science and Practice, Stud. Surf. Sci. Catal. Vol. 137, by Herman van Bekkum, pp. 267-268).

According to a preferred embodiment, the precursor of the modified zeolite is selected from Y zeolite, stabilized Y zeolite, ultra-estabilized Y zeolite, and combinations thereof. Furthermore, preferably, said precursor has a silica/alumina molar ratio between 3: 1 and 100:1, preferably between 4:1 and 75:1, and more preferably between 4.2: 1 and 50: 1.

According to a particular embodiment, the modified zeolite can be prepared from its precursor by contact with a basic aqueous solution, preferably a NaOH aqueous solution. When the precursor has a silica/alumina molar ratio of less than 8:1, preferably, an acid treatment will be carried out previous to the basic treatment. Preferably, the acid treatment will be carried out using a solution of H₄EDTA, to increase the silica/alumina molar ratio to values ≥ 8: 1. To optimize the effect of the aqueous alkali treatment, organic nitrogenated species can be added, preferably tetrapropylammonium bromide (TPABr) to the alkaline solution, and/or acid treatments can be performed before or after the base treatment. The introduction of organic nitrogenated species in the aqueous base solution is preferred when the precursor has a silica/alumina molar ratio of > 12:1. Carrying out an acid treatment after the basic modification, preferably using an Na₂H₂EDTA aqueous solution, is preferred in the case that the base modification is carried out in the absence of organic nitrogenated species. For more variations and details with regard to the preparation of the modified Y zeolite (Verboekend et al., Adv. Funct. Mater. 22(5) (2012) 916-928).

According to a particular embodiment, said catalytic cracking process of organic compounds can comprise the use of a second zeolitic material, in addition to the modified Y zeolite material.

According to what has been explained above, the modified Y zeolitic material, used in the process of the present invention, may be part of catalytic cracking catalysts for organic compounds as the sole zeolitic component, or may be combined with one or more zeolitic components.

According to a particular embodiment, the second zeolitic material that is combined with the modified Y zeolite is selected from zeolites with structures containing pores delimited by rings selected from 14-membered rings, 12-member rings, 10-member rings and combinations thereof. Preferably it can be selected from CIT-5, UTD-1, Beta zeolite, ITQ-7, Y zeolite, SSZ-33; NU-86; ZSM-5, SAPO-11, MCM-22 and combinations thereof, and in a preferred manner, it is selected from Beta zeolite, Y zeolite, ZSM-5 and combinations thereof.

According to this particular embodiment, the first modified Y zeolitic material and the second zeolitic material can be present in the same particle of catalyst or in separate particles. In both cases, the composition of the cracking products is determined by the combined effect of the different zeolitic components. The Y zeoliitic modified material can be included in a matrix through a mixture formed by this zeolite as the sole zeolitic component, or this zeolite plus another one, or plus other ones, as explained above, in addition to the binding agent or binder, and any other conventional additive or additives in catalytic cracking catalysts such as kaolin, silica, alumina.

According to a particular embodiment wherein said catalytic cracking process comprises the use of a second zeolite material in addition to the modified zeolite, the second zeolite material can be used in a proportion by weight comprised in the range from 2 to 80% with regard to the first zeolitic material.

As discussed above, and according to another particular embodiment of the present invention, the first zeolitic material, the modified Y zeolite, could be altered by ion exchange processes, ion exchanges that could be partial or complete. Preferably, the ions involved in the ion exchange are selected from among divalent cations, trivalent cations, cations belonging to the rare earths group (RE) and combinations thereof, preferably rare earths.

According to a particular embodiment, the ctalytic process of the present invention can be carried out at a temperature comprised in the range 400 to 800°C, preferably from 450 to 650°C.

The catalytic process described in the present invention is a catalytic process of organic compounds in the absence of hydrogen.

According to a particular embodiment of the present invention, said organic compounds comprise at least a hydrocarbon fraction.

According to another particular embodiment, this hydrocarbon fraction can derive from petroleum, can derive from biomass o can be a synthetic one.

The catalytic process described of the present invention can be used, preferably, in deep catalytic cracking processes (DCC) and fluid bed catalytic processes (FCC).

### Brief description of the Figures

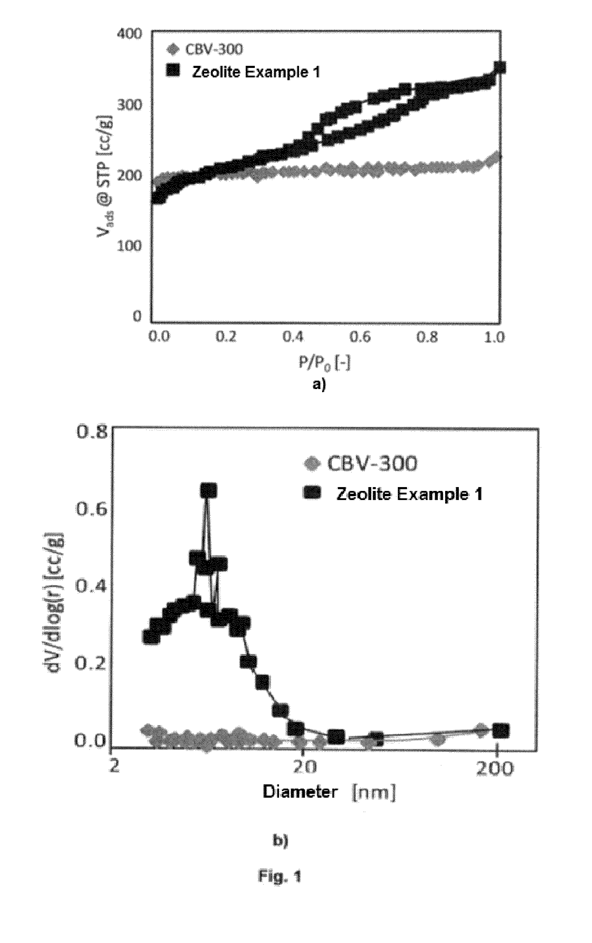

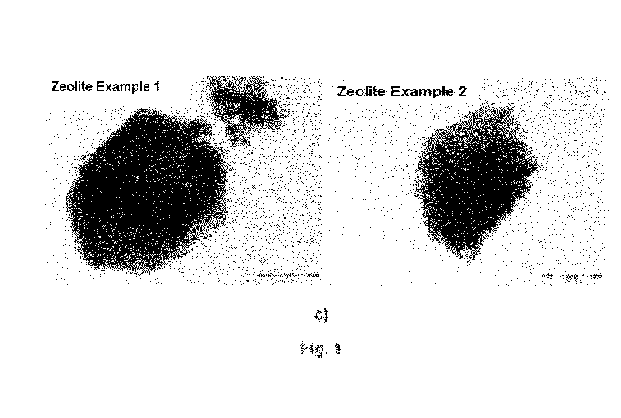

*Figure 1**: a) N₂ Adsorption Isotherms at 77 K of a commercial USY zeolite, CBV300 (Zeolyst) and of a zeolite modified according to the process described in Example 1. The BJH mesopore size distribution is shown in the box inserted in the main figure. b) Transmission electron microscopy images of the commercial zeolite CBV300 and of the zeolite modified* as *detailed in Example 1. The scale bar applies to both images.*

### Examples

In the following examples which illustrate the body of this invention are shown.

### Example 1: Preparation of a modified USY zeolite

30 g of CBV300 (Zeolyst International, ratio silica:alumina 5.1:1) are contacted with a solution of 14.4 g of H₄EDTA in 450 cm³ of distilled water, under vigorous stirring, at 100°C for 24 h. Then the solid is separated from the solution using a standard method: the suspension is cooled, filtered, washed with distilled water and dried at 65°C overnight.

20 g of the resulting solid undergo a basic treatment in a solution of 2.4 g of NaOH in 600 cm³ of distilled water at 65°C for 30 minutes under vigorous stirring conditions. The resulting solid is separated from the solution following the procedure described in the preceding paragraph, and 15 g of this solid are treated under vigorous stirring conditions at 100°C for 6 hours with a solution of 9.2 g of Na₂H₂EDTA in 225 cm³ of distilled water. Finally, the solid is separated from the liquid and is subjected to an ion exchange process in a 0.1 M solution of NH₄NO₃ for 12 h.

### Example 2: Hydrothermal treatment of the modified zeolite.

The modified zeolite, obtained according to the process described in Example 1 has been calcined in an oven, pure and in a powder form, in a 100% steam atmosphere at 750°C for 5 hours.

### Example 3: Exchange of the modified zeolite with RE and hydrothermal treatment of the modified zeolite exchanged with RE.

The modified zeolite, obtained according to the process described in Example 1, was subjected to an ion exchange process, under vigorous stirring and reflux conditios, with a 0.1 M aqueous solution of RECl₃, at 80°C for 2 h. The weight proportion solution to zeolite used was of 10. Next, the solid is separated by filtration, washed with deionized water until complete removal of chlorides and is dried at 100°C overnight. The obtained solid is calcined in an oven at 500°C for 3 h. This procedure is repeated a second time, obtaining a final solid with a RE content of 3.5% by weight, with respect to the REO. Finally, the resulting solid is calcined in an oven, pure and in powder form, in a 100% steam atmosphere, at 800°C for 5 hours.

### Example 4. Catalytic cracking of a vacuum diesel in the presence of a catalyst that contains the modified zeolite described in Example 2

For this example, a catalyst was prepared, CAT-A, with the modiifed zeolitde described in Example 2. The zeolite is converted into tablets, is broken and sieved, the fraction with a diameter between 0.59 y 0.84 mm is taken. 0.5 g of this sample is mixed with SiO₂ (2.5 g) sieved to a particle size of 0.25-0.42 mm, and this mixture is calcined "in-situ" for 3 hours at 540°C under an air flow (100 ml/min).

The catalytic cracking reaction of a vacuum diesel, the main properties of which are listed in Table 1, is carried out in a fixed bed reactor of the "Microactivity Test" (MAT) type at 510 °C, 30 seconds feeding time, and different catalyst/feed relationships expressed in weight of zeolite / weight of feed (CAT / OIL).

**Tabla 1: Properties of the vacuum diesel.**

| | |
|---|---|
| Density (15°C) g cc⁻¹ | 0.9172 |
| Point of aniline (°C) | 79.2 |
| Sulfur (% by weight) | 1.65 |
| Nitrogen (ppm) | 1261 |
| Na (ppm) | 0.18 |
| Cu (ppm) | < 0.1 |
| Fe (ppm) | 0.30 |
| Ni (ppm) | 0.2 |
| V (ppm) | 0.40 |

| **ASTM D-1160 (°C)** | |
|---|---|
| 5% | 319 |
| 10% | 352 |
| 30% | 414 |
| 50% | 436 |
| 70% | 459 |
| 90% | 512 |
| VABP (°C) | 435 |
| K (UOP) | 11.82 |
| Average molecular weight | 407 |
| Aromatic carbon (% weight) | 22.96 |
| Naphthenic carbon (% weight) | 15.16 |
| Parafinic carbon (% weight) | 61.88 |

Table 2 shows the yields (interpolated) obtained with CAT-A at a total conversion of 75%, defined as the sum of the yields to gasoline, diesel (LCO), gases and coke.

**Table 2: Comparison of activity and yields at constant conversion of 75%.**

| Catalyst | CAT-A | CAT-B | CAT-C | CAT-D |
|---|---|---|---|---|
| Conversion (%) | 75.0 | 75.0 | 77.2 | 75 |
| CAT/OIL | 0.52 | 0.50 | 0.25 | 0.59 |
| Yields (%): | | | | |
| Gasoline | 33.9 | 33.6 | 36.3 | 33.6 |
| Diesel | 29.5 | 26.6 | 26.6 | 30.5 |
| Gases | 8.8 | 13.1 | 11.6 | 9.2 |
| Coke | 2.8 | 1.7 | 2.7 | 1.6 |
| Bottom (482°C+) | 1.0 | 1.8 | 1.6 | 2.2 |
| Hydrogen | 0.1 | 0.1 | 0.1 | 0.1 |
| Methane | 0.3 | 0.4 | 0.3 | 0.3 |
| Ethane | 0.2 | 0.3 | 0.2 | 0.3 |
| Ethylene | 0.3 | 0.6 | 0.5 | 0.3 |
| Propane | 0.4 | 0.9 | 1.1 | 0.4 |
| Propylene | 2.3 | 3.2 | 2.4 | 2.4 |
| Isobutene | 2.1 | 3.6 | 3.6 | 2.1 |
| n-Butene | 0.4 | 0.7 | 0.8 | 0.4 |
| T2-butene | 0.8 | 1.0 | 0.8 | 0.9 |
| 1-butene | 0.6 | 0.8 | 0.6 | .7 |
| Isobutene | 0.8 | 0.9 | 0.6 | 0.9 |
| C2-butene | 0.6 | 0.8 | 0.6 | 0.7 |
| Propylene/propane | 5.4 | 3.4 | 2.1 | 5.3 |
| Butenes/butanes | 1.2 | 0.8 | 0.6 | 1.3 |

Table 2 also shows the results obtained in the catalytic cracking of a vacuum diesel with two commercial USY zeolites, Zeolyst CBV760, with a unit cell of 24.26 Å, and Zeolyst CBV712, with a unit cell of 24.36 Å. Starting with these commercial zeolites CBV760 (0.5 g) and CBV712 (0.5 g) two catalys have been prepared, CAT-B and CAT-C respectively, mixing the zeolites with silica as it was described for the preparation of CAT-A.

The results show that catalyst CAT-A, that contains the zeolite modified according to the process described in Example 2, the use thereof is claimed in this patent, with an activity similar to the one of catalyst CAT-B, produces more gasoline, and especially more diesel and less gases than CAT-B. Moreover CAT-A is more active in the conversion of the heaviest fraction or bottom, with boiling point higher than 482°C. On the other hand, the gas fraction obtained with catalyst CAT-A contains less dry gases and the LPG (C3+C4) fraction is more olefinic than the one obtained with CAT-B.

The results shown in Table 2 also show that catalyst CAT-A, although it is less active, it produces more diesel and less gases, and converts a higher proportion of the heaviest fraction or bottom than catalyst CAT-C. The gas fraction obtained with CAT-C contains more dry gas and the LPG fraction is less olefinic than the one obtained with CAT-A.

### Example 5: catalytic cracking of a vacuum diesel in the presence of a catalyst that contains the modified zeolite described in Example 3.

For this example a catalyst CAT-D was prepared with the modified zeolite described in Example 3. The zeolite is converted into tablets, it is broken and sieved, and the fraction between 0.59 and 0.84 mm of diameter is taken. 0.5 g of this sample are mixed with SiO₂ (2.5 g) sieved to a particle size of 0.25-0.42 mm, and this mixture is calcined "in-situ" for 3 hours at 540°C under an air flow (100 ml/min).

The catalytic cracking reaction of a vacuum diesel, the main properties of which are included in Table 1, is carried out in a fix bed reactor of the "Microactivity Test" (MAT) type, at 510°C, 30 seconds of feeding time, and different catalyst/feed relationships expressed in weight of zeolite / weight of feed (CAT / OIL).

The catalytic results, compared in Table 2 with the ones obtained with catalysts CAT-A, CAT-B and CAT-C, show that catalyst CAT-D, that contains the modified zeolite claimed in this patent prepared according to the process described in Example 3, produces more gasoline, but especially more diesel and less gases than catalyst CAT-B, based on a commercial USY zeolite USY, if one compares the yields to a same conversion of 75%. On the other hand, catalyst CAT-D produces even more diesel than catalyst CAT-A, that contains the modified zeolite described in Example 2 and the use thereof is also claimed in this patent. Finally, the fraction of gas products obtained with catalysts D contains less dry gas and its LPG fraction is more olefinic than the gas fraction obtained with catalyst CAT-B. The results shown in Table 2 also show that catalyst CAT-D, although it is less active, produces more diesel and less gases than catalyst CAT-C, and the gas fraction obtained with CAT-C contains more dry gas, and LPG fraction less olefinic than the one obtained with catalyst CAT-D.

### Example 6: Catalytic cracking of a vacuum diesel in the presence of a catalyst that contains the modified zeolite in combination with a ZSM-5 zeolite.

In this example the activity and selectivity obtained in the cracking of a vacuum diesel with two catalysts, CAT-E y CAT-F (Table 3) are compared. Catalyst CAT-E has been prepared in the same way as catalyst CAT-A (according to the process described in Example 3), but it contains the modified zeolite prepared according to Example 2 in combination of a commercial ZSM-5 zeolite with a Si/Al relation of 40 (CBV8020 from Zeolyst Int.), in a proportion modified zeolite/ZSM-5 of 1:0.1 by weight. Catalyst CAT-F was prepared in the same manner as catalyst B (according to the process described in Example 3), but it combines USY zeolite CBV760, with a commercial ZSM-5 zeolite with a Si/Al relation of 40 (CBV8020 of Zeolyst Int.), in a proportion CBV760/ZSM-5 of 1:0.1 by weight.

Both for catalyst CAT-E and for CAT-F the zeolites were placed in a single bed, and the reaction was carried out under the experimental conditions detailed in Example 3.

**Table 3: Comparison of activity and yields at constant conversion of 75%.**

| Catalyst | CAT-E | CAT-D |
|---|---|---|
| Conversion (%) | 75 | 75 |
| CAT/OIL | 0.44 | 0.42 |
| Yields (%): | | |
| Gasoline | 30.2 | 29.8 |
| Diesel | 28.6 | 25.5 |
| Gases | 13.9 | 13.4 |
| Coke | 2.4 | 2.3 |
| Bottom (482°C+) | 2.1 | 2.5 |
| Hydrogen | 0.1 | 0.1 |
| Methane | 0.3 | 0.3 |
| Ethane | 0.2 | 0.2 |
| Ethylene | 0.7 | 1.0 |
| Propane | 1.1 | 1.4 |
| Propylene | 4.1 | 5.2 |
| Isobutane | 2.8 | 3.9 |
| n-Butane | 0.7 | 0.9 |
| T2-butene | 1.2 | 1.3 |
| 1-butene | 0.9 | 0.9 |
| Isobutene | 1.2 | 1.5 |
| C2-butene | 0.9 | 0.9 |
| Propylene/propane | 3.9 | 3.8 |
| Butenes/butanes | 1.2 | 1.0 |

The results obtained (Table 3) show that catalyst CAT-E, based on the combination of the modified zeolite, claimed in the present patent, and a ZSM-5 zeolite, produces more gasoline and diesel, and a LPG fraction, pertaining to the gas products, more olefinic than catalyst CAT-F, prepared starting from a combination of a CBV760 USY zeolite and a ZSM-5 zeolite. Moreover, catalyst CAT-E converts in a higher proportion the bottom fraction (with Tb>482°C), showing in this manner the advantage of a catalyst wherein the modified zeolite according to Example 2 is combined with a ZSM-5, in comparison with a catalyst based on the combination of a commercial USY zeolite and a ZSM-5, with regard to the bottom conversion.

### Example 7. Quality of the liquid fuels, gasoline and diesel, obtained through the catalytic cracking of a vacuum diesel using catalysts CAT-A and CAT-D, that contain the modified zeolites described in Examples 2 and 3.

The results included in Table 4 show that catalyst CAT-A, CAT-D, that contain modified zeolite according to Examples 2 and 3, respectively, produce a gasoline fraction with a lower aromatic content than the gasoline obtained with the use of catalyst CAT-B. Catalyst CAT-A, is, in addition, richer in i-paraffins.

On the other hand, the larger proportion of isoparaffins and the lower aromatic concentration is also observed when the quality of the gasoline obtained with catalysts E and F is compared, wherein the zeolite modified according to Example 2 and the CBV760 commercial USY zeolite are combined with ZSM-5.

**Table 4: PIONA analysis of the obtained gasoline.**

| Catalyst | CAT-A | CAT-B | CAT-D | CAT-E | CAT-F |
|---|---|---|---|---|---|
| Conversion (%) | 74.0 | 75.2 | 75 | 78.1 | 78.9 |
| Distribution (% by weight) | | | | | |
| n-Paraffins | 3.1 | 2.6 | 3.0 | 3.1 | 2.7 |
| i-Paraffins | 19.5 | 18.4 | 21.5 | 16.3 | 15.5 |
| Olefines | 12.3 | 8.6 | 10.5 | 11.9 | 7.6 |
| Naphthenes | 17.3 | 13.6 | 17.2 | 16.8 | 13.2 |
| Aromatics | 45.2 | 55.5 | 44.7 | 48.5 | 59.6 |
| Others | 2.8 | 1.3 | 3.1 | 3.4 | 1.3 |

In tables 5 and 6 the distribution of the products of the diesel fraction obtained with catalysts CAT-A y CAT-D, claimed in the process of the present patent and with the catalyst of reference, based on a commercial USY zeolite, CAT-D, is shown. Catalysts CAT-A and CAT-D produce diesel with a lower content in di- and triaromatics, and larger proportion of saturated and monoaromatic products, what means an increase of the quality of the diesel produced.

**Table 5: bidimensional chromatography analysis (GCxGC) of the liquid products obtained, pertaining to the diesel fraction (C₁₂-C₂₀). Selectivity.**

| Catalyst | CAT-A | CAT-B | CAT-D |
|---|---|---|---|
| Conversion (%) | 74.0 | 75.2 | 75.0 |
| Selectivity (% by weight) | | | |
| Saturated | 32.7 | 28.0 | 33.7 |
| Monoaromatics | 23.7 | 21.5 | 23.8 |
| Diaromatics | 39.3 | 45.3 | 38.5 |
| Triaromatics | 4.3 | 5.2 | 4.0 |

**Table 6: bidimensional chromatography analysis (GCxGC) of the liquid products obtained, pertaining to the diesel fraction (C₁₂-C₂₀). Yields.**

| Catalyst | CAT-A | CAT-B | CAT-D |
|---|---|---|---|
| Conversion (%) | 74.0 | 75.2 | 75.0 |
| Yield (% by weight) | | | |
| Saturated | 9.7 | 7.4 | 10.3 |
| Monoaromatics | 7.0 | 5.7 | 7.3 |
| Diaromatics | 11.6 | 12.0 | 11.7 |
| Triaromatics | 1.3 | 1.4 | 1.2 |

## Claims

1. Catalytic cracking process of organic compounds in the absence of hydrogen **characterized in that** it comprises, at least, the following steps:
a. introducing at least a modified Y zeolite, into a reactor,
b. feeding the reactor with at least one organic compound,
c. leaving in contact the modified Y zeolite and the organic compound the time necessary for the reaction to occur
wherein the modified Y zeolite has mesoporosity and is prepared from at least a precursor in contact with an aqueous basic solution and at least a hydrothermal treatment.

2. Catalytic cracking process of organic compounds according to claim 1, **characterized in that** the preparation of the modified Y zeolite further comprises, at least, an ion exchange process.

3. Catalytic cracking process of organic compounds according to claims 1 and 2, **characterized in that** the precursor of the modified zeolite is selected from Y zeolite, stabilized Y zeolite, ultra-stabilized Y zeolite and combinations thereof.

4. Catalytic cracking process of organic compounds according to claims 1 and 3, **characterized in that** the precursor of the modified zeolite has a silica/alumina molar relation comprised between 3:1 and 100:1.

5. Catalytic cracking process of organic compounds according to claim 4, **characterized in that** the precursor of the modified zeolite has a silica/alumina molar relation comprised between 4:1 and 75:1.

6. Catalytic cracking process of organic compounds according to claims 1 to 5, **characterized in that** said process comprises at least a second zeolitic material.

7. Catalytic cracking process of organic compounds according to claim 6, **characterized in that** said second zeolitic material is selected from zeolites with structures containing pores delimited by rings selected from among 14, 12 and 10 membered rings and combinations thereof.

8. Catalytic cracking process of organic compounds according to claims 6 and 7, **characterized in that** said second zeolitic material is selected from CIT-5, UTD-1, Beta zeolite, ITQ-7, Y zeolite, SSZ-33, Nu-86, ZSM-5, SAPO-11, MCM-22 and combinations thereof.

9. Catalytic cracking process of organic compounds according to claim 8, **characterized in that** said second zeolitic material is selected from Beta zeolite, Y zeolite, ZSM-5, and combinations thereof.

10. Catalytic cracking process of organic compounds according to claims 6 to 9, **characterized in that** said second zeolitic material is present in a proportion by weight with respect to the modified Y zeolite from between 2 and 80%.

11. Catalytic cracking process of organic compounds according to claims 1 and 2, **characterized in that** the ion exchange is carried out with ions selected from divalent cations, trivalent cations, rare earths and combinations thereof.

12. Catalytic cracking process of organic compounds according to claim 11, **characterized in that in that** the ion exchange is carried out with rare earths.

13. Catalytic cracking process of organic compounds according to claims 11 and 12, **characterized in that** the ion exchange is complete.

14. Catalytic cracking process of organic compounds according to claims 11 and 12, **characterized in that** the ion exchange is partial.

15. Catalytic cracking process of organic compounds according to claims 1 to 14, **characterized in that** it is carried out at a temperature between 400 and 800°C.

16. Catalytic cracking process of organic compounds according to claim 15, **characterized in that** it is carried out at a temperature between 450 y 650°C.

17. Catalytic cracking process of organic compounds according to claims 1 to 16, **characterized in that** the organic compound comprises, at least, a hydrocarbon fraction.

18. Catalytic cracking process of organic compounds according to claim 17, **characterized in that** the hydrocarbon fraction derives from petroleum.

19. Catalytic cracking process of organic compounds according to claim 17, **characterized in that** the hydrocarbon fraction derives from biomass.

20. Catalytic cracking process of organic compounds according to claim 17, **characterized in that** the hydrocarbon fraction is a synthetic one.

21. Catalytic cracking process of organic compounds according to claims 1 to 20, **characterized in that** said process is selected between deep catalytic cracking and catalytic cracking in a fluidized bed.
